# EUROPEAN PATENT APPLICATION

(11) **EP 4 580 258 A1**
(43) Date of publication of application: **02.07.2025**
(21) Application number: 23857267.1
(22) Date of filing: 16.08.2023
(51) Int. Cl.: H04W 36/08, H04W 16/32, H04W 72/0457

(54) **WIRELESS BASE STATION**

(30) Priority: 25.08.2022 JP 2022134557
(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2023/029602
(87) International publication number: WO 2024/043154

(57) **Abstract**

A radio base station is provided that can execute CPAC surely even when selective activation is applied and the CPAC is partially operated. The radio base station includes a control unit that controls an execution of an addition/change procedure of a secondary cell, and a transmission unit that transmits a message to a transition target secondary node for a terminal when executing the addition/change procedure, the message including information of a candidate secondary cell that is a transition target maintained by the terminal.

## Description

### TECHNICAL FIELD

The present disclosure relates to a radio base station that supports an addition/change procedure of a secondary cell (secondary node).

### BACKGROUND

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.

For example, in 3GPP Release 17, a simplified addition/change procedure of a conditional secondary cell (secondary node) (CPAC: conditional PSCell addition/change) is specified so as to achieve an addition or a change of a primary SCell (PSCell) more efficiently.

Further, in 3GPP Release 18, regarding NR-NR Dual Connectivity (NR-DC), a method for maintaining a CPAC configuration without releasing the configuration each time the CPAC is performed (it may be called selective activation) has been studied (Non-Patent Literature 1). This makes it possible to change a cell group (CG) more flexibly while avoiding reconfiguring and restarting the CPAC.

Meanwhile, it is pointed out that the application of such selective activation may cause security problems (Non-Patent Literature 2).

### CITATION LIST

### NON-PATENT LITERATURE

Non-Patent Literature 1: "Revised WID on Further NR mobility enhancements", RP-221799, 3GPP TSG RAN Meeting #96, 3GPP, June 2022
Non-Patent Literature 2: "Setting the stage for practical operation of selective activation of cell groups", R2-2207468, 3GPP TSG RAN WG2#119-e, 3GPP, August 2022

### SUMMARY OF THE INVENTION

When selective activation is applied, in the case of a secondary cell change procedure (CPC) initiated by a secondary node, the terminal (User Equipment, UE) needs to reconfigure a candidate secondary cell that is a transition target after executing the CPC. However, a new secondary node (which may mean a target secondary node) to which the UE has transitioned cannot recognize the information of the candidate secondary cell that is the transition target maintained by the UE.

Further, the secondary node cannot recognize whether the UE maintains the configuration of a transition source secondary node (which may mean a source secondary node), and/or the secondary node cannot recognize the identification information (cell ID) of a secondary cell formed by the transition source secondary node.

Accordingly, there is a problem that it is difficult for the secondary node to configure an execution condition for the CPC.

Therefore, the following disclosure has been made in view of such a situation, and an object of the disclosure is to provide a radio base station that can execute CPAC surely even when selective activation is applied and the CPAC is partially operated.

An aspect of the present disclosure is a radio base station including: a control unit that controls an execution of an addition/change procedure of a secondary cell; and a transmission unit that transmits a message to a transition target secondary node for a terminal when executing the addition/change procedure, the message including information of a candidate secondary cell that is a transition target maintained by the terminal.

An aspect of the present disclosure is a radio base station including: a control unit that controls an execution of an addition/change procedure of a secondary cell; and a transmission unit that transmits a message to a transition target secondary node for a terminal, the message including an indication indicating whether the terminal maintains configuration information of a transition source secondary cell.

An aspect of the present disclosure is a radio base station including: a control unit that controls an execution of an addition/change procedure of a secondary cell; and a transmission unit that transmits a message to a terminal, the message including an indication indicating whether the terminal needs to maintain an execution condition for the addition/change procedure after executing the addition/change procedure.

An aspect of the present disclosure is a radio base station including: a control unit that controls an execution of an addition/change procedure of a secondary cell; and a transmission unit that transmits a message to a terminal, the message including an indication indicating that the addition/change procedure is initiated by a master node or the addition/change procedure is initiated by a secondary node.

An aspect of the present disclosure is a radio base station including: a control unit that controls an execution of an addition/change procedure of a secondary cell; and a transmission unit that transmits a message to a terminal, the message including an indication indicating an execution condition for the addition/change procedure configured by a master node, or an execution condition for the addition/change procedure configured by a secondary node.

### BRIEF DESCRIPTION OF DRAWINGS

[FIG. 1] FIG. 1 is an overall schematic diagram of a radio communication system 10 according to a present embodiment.
[FIG. 2] FIG. 2 is a diagram illustrating the frequency ranges used in the radio communication system 10.
[FIG. 3] FIG. 3 is a diagram illustrating a configuration example of radio frames, sub-frames, and slots used in the radio communication system 10.
[FIG. 4] FIG. 4 is a functional block diagram of UE 200.
[FIG. 5] FIG. 5 is a functional block diagram of gNB 100.
[FIG. 6] FIG. 6 is a diagram for explaining a first problem.
[FIG. 7] FIG. 7 is a diagram illustrating an example of a known standard.
[FIG. 8] FIG. 8 is a diagram illustrating an example of a known standard.
[FIG. 9] FIG. 9 is a diagram for explaining a third problem.
[FIG. 10] FIG. 10 is a diagram for explaining a communication sequence example of operation example 1 (example 1).
[FIG. 11] FIG. 11 is a diagram for explaining a communication sequence example of the operation example 1 (example 2).
[FIG. 12] FIG. 12 is a diagram for explaining a communication sequence example of the operation example 1 (example 3).
[FIG. 13] FIG. 13 is a diagram for explaining a communication sequence example of the operation example 1 (example 4).
[FIG. 14] FIG. 14 is a diagram for explaining a communication sequence example of the operation example 1 (example 5).
[FIG. 15] FIG. 15 is a diagram for explaining a communication sequence example of the operation example 1 (example 6).
[FIG. 16] FIG. 16 is a diagram for explaining a communication sequence example of operation example 2-1 (example 7).
[FIG. 17] FIG. 17 is a diagram for explaining a communication sequence example of operation example 2-2 (example 9).
[FIG. 18] FIG. 18 is a diagram for explaining a communication sequence example of the operation example 2-2 (example 10).
[FIG. 19] FIG. 19 is a diagram for explaining a communication sequence example of the operation example 1 and operation example 2-2 (example 11).

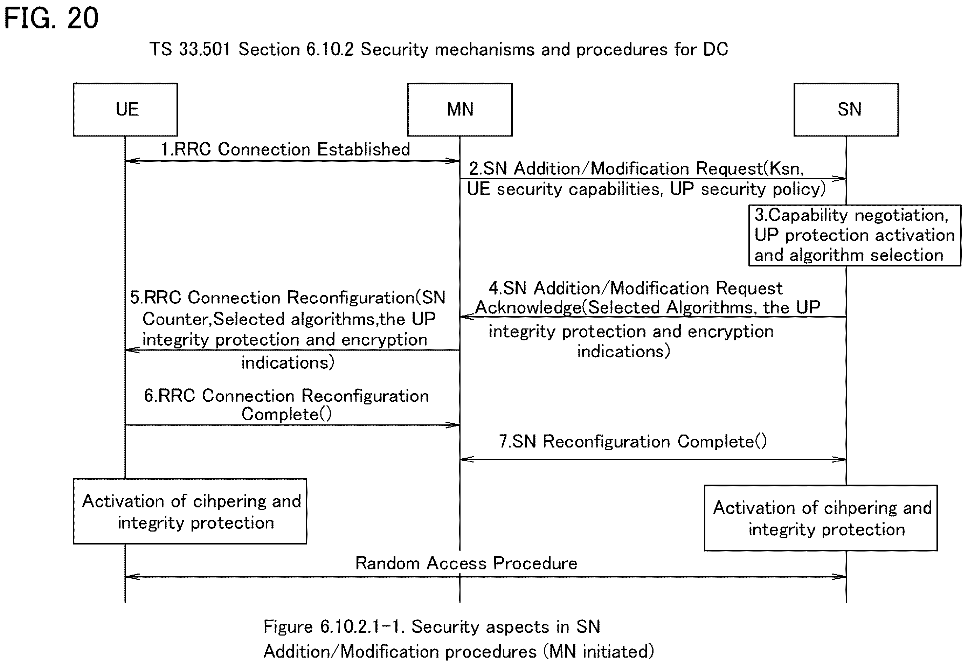

[FIG. 20] FIG. 20 is a diagram illustrating an example of a known standard.

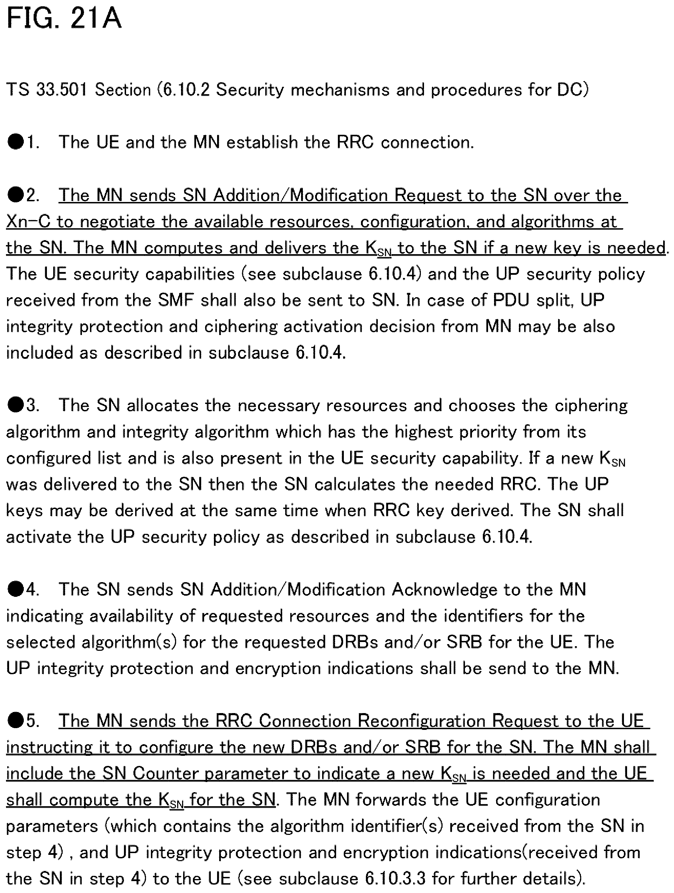

[FIG. 21A] FIG. 21A is a diagram illustrating an example of a known standard.

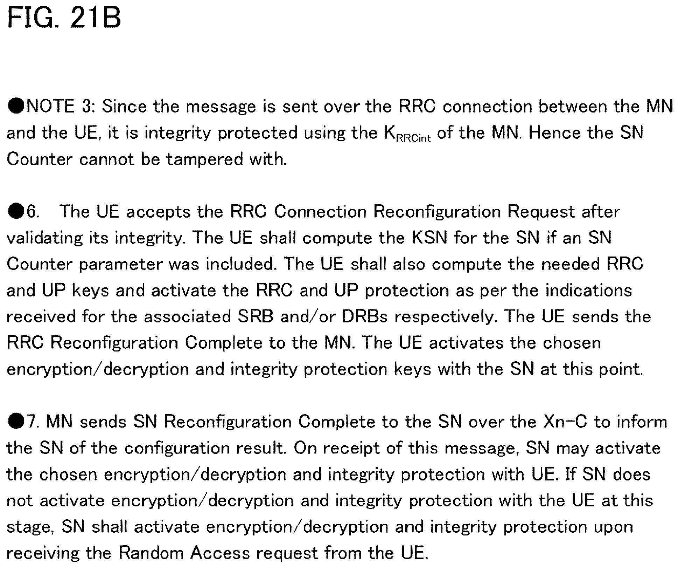

[FIG. 21B] FIG. 21B is a diagram illustrating an example of a known standard.

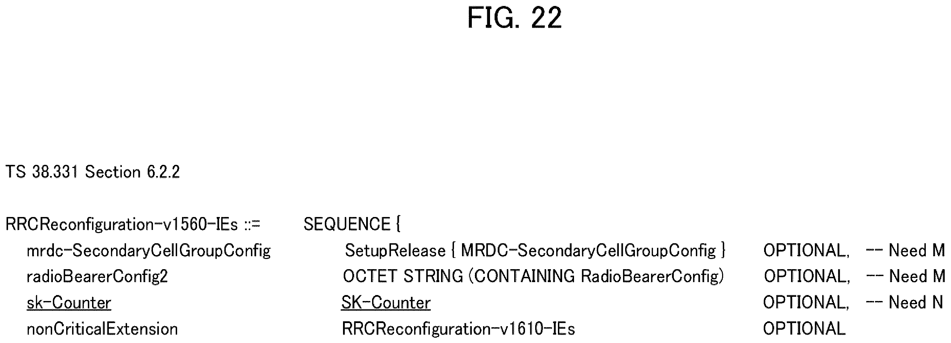

[FIG. 22] FIG. 22 is a diagram illustrating an example of a known standard.

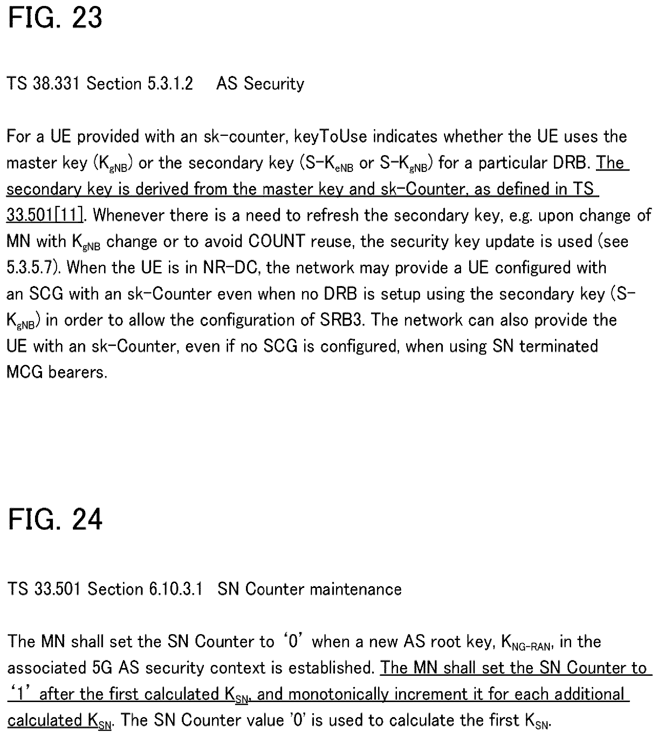

[FIG. 23] FIG. 23 is a diagram illustrating an example of a known standard.
[FIG. 24] FIG. 24 is a diagram illustrating an example of a known standard.
[FIG. 25] FIG. 25 is a diagram illustrating an example of a hardware configuration of the gNB 100 and the UE 200.
[FIG. 26] FIG. 26 is a diagram illustrating a configuration example of a vehicle 2001.

### DETAILED DESCRIPTION OF THE INVENTION

An embodiment will be described below with reference to the drawings. Note that the same or similar reference numerals have been attached to the same functions and configurations, and a description thereof will be omitted as appropriate.

### [Embodiment]

### (1) Overall schematic configuration of radio communication system 10

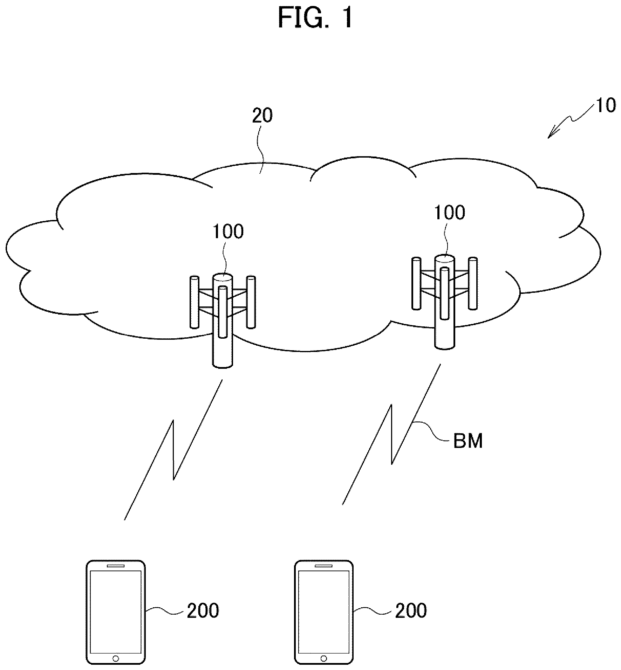

FIG. 1 is an overall schematic diagram of a radio communication system 10 according to the present embodiment. The radio communication system 10 is a radio communication system according to 5G New Radio (NR), and includes a Next Generation-Radio Access Network 20 (hereinafter, referred to as NG-RAN 20) and a terminal 200 (hereinafter, referred to as User Equipment (UE) 200). The radio communication system 10 may be a radio communication system according to a scheme called Beyond 5G, 5G Evolution, or 6G. The radio communication system 10 may include a gNB 100, the UE 200, the NG-RAN 20, and a core network.

The NG-RAN 20 includes a radio base station 100 (hereinafter, gNB 100). The NG-RAN 20 actually includes a plurality of NG-RAN nodes, specifically gNBs (or ng-eNBs), and is connected to a 5G-compliant core network (for example, 5GC). The NG-RAN 20 and the core network may be simply referred to as a "network". The specific configuration of the radio communication system 10 including the gNB 100 and UE 200 is not limited to the example illustrated in FIG. 1.

The gNB 100 is a radio base station according to 5G, and performs radio communication with the UE 200 according to 5G. The gNB 100 and the UE 200 can support Massive MIMO (Multiple-Input Multiple-Output) that generates a beam BM with higher directivity by controlling radio signals transmitted from a plurality of antenna elements, carrier aggregation (CA) that uses a plurality of component carriers (CCs) bundled together, dual connectivity (DC) that simultaneously performs communication to two or more transport blocks between the UE and each of the two NG-RAN nodes, and the like.

In the present embodiment, the radio communication system 10 may support a conditional reconfiguration. The conditional reconfiguration may include conditional handover (CHO), conditional primary secondary cell (PSCell) change (CPC), and conditional PSCell addition (CPA). The configuration information may be referred to as ConditionalReconfiguration. The ConditionalReconfiguration may include Special Cell (hereinafter, SpCell) configuration. The SpCell may include PCell and PSCell. That is, the SpCell configuration is the configuration information related to a candidate target cell in the conditional reconfiguration (CHO, CPC or CPA). The ConditionalReconfiguration may be included in an RRC Reconfiguration.

The core network includes a network device. The network device may include an LMF (Location Management Function), an AMF (Access and Mobility Management Function), and the like. The network device may be an E-SMLC (Evolved Serving Mobile Location Centre). The gNB 100 includes a radio communication node.

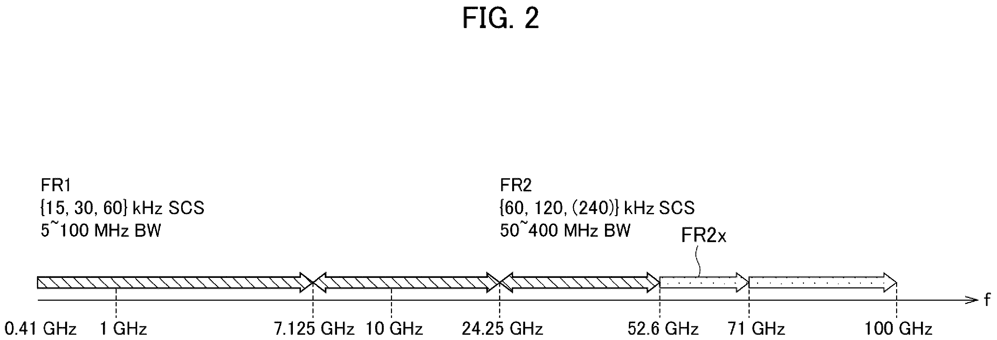

The radio communication system 10 supports a plurality of frequency ranges (FR). FIG. 2 illustrates the frequency ranges used in the radio communication system 10. As illustrated in FIG. 2, the radio communication system 10 supports the plurality of frequency ranges (FR). Specifically, the radio communication system 10 may support the following frequency ranges:
- FR1: 410 MHz to 7.125 GHz
- FR2: 24.25 MHz to 52.6 GHz

In FR1, sub-carrier spacing (SCS) of 15, 30 or 60 kHz may be used, and a bandwidth (BW) of 5 to 100 MHz may be used. FR2 has a higher frequency than FR1, and SCS of 60 or 120 kHz (may include 240 kHz) may be used, and a bandwidth (BW) of 50 to 400 MHz may be used.

The SCS may be interpreted as numerology. The numerology is defined in 3GPP TS38.300, and corresponds to one sub-carrier spacing in the frequency domain.

Further, the radio communication system 10 also supports a higher frequency band than that of FR2. Specifically, the radio communication system 10 supports a frequency band exceeding 52.6 GHz and up to 71 GHz or 114.25 GHz. Such a higher frequency band may be referred to as "FR2x" for the sake of convenience.

In order to solve the problem that the effect of phase noise becomes large in a high frequency band, when a band exceeding 52.6 GHz is used, Cyclic Prefix-Orthogonal Frequency Division Multiplexing (CP-OFDM)/Discrete Fourier Transform-Spread (DFT-S-OFDM) having larger sub-carrier spacing (SCS) may be applied. In addition, when a band exceeding 52.6 GHz is used, Cyclic Prefix-Orthogonal Frequency Division Multiplexing (CP-OFDM)/Discrete Fourier Transform-Spread (DFT-S-OFDM) having larger sub-carrier spacing (SCS) may be applied.

In a high frequency band such as FR2x, the increase of phase noise between carriers becomes a problem as described above. Therefore, it may be necessary to apply larger (wider) SCS or a single carrier waveform. The symbol/CP (Cyclic Prefix) period and slot period becomes shorter as the SCS becomes lager (when the 14 symbol/slot configuration is maintained).

When the 14 symbol/slot configuration is maintained, the symbol period (and slot period) becomes shorter as the SCS becomes larger (wider). The symbol period may be called a symbol length, a time direction, a time domain, or the like. The frequency direction may be called a frequency domain, a resource block, a subcarrier, a BWP (Bandwidth part), or the like.

The frequency resource may include a component carrier, a subcarrier, a resource block (RB), a resource block group (RBG), a BWP (Bandwidth part), and the like. The time resource may include a symbol, a slot, a minislot, a subframe, a radio frame, a DRX (Discontinuous Reception) period, and the like.

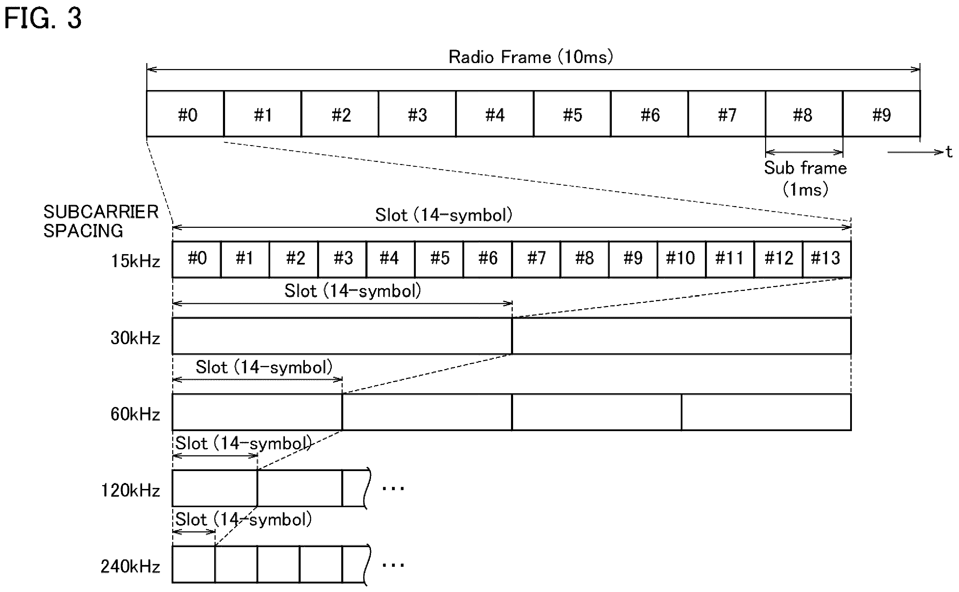

FIG. 3 illustrates a configuration example of radio frames, subframes, and slots used in the radio communication system 10.

As illustrated in FIG. 3, one slot is constituted of 14 symbols, and, the symbol period (and slot period) becomes shorter as the SCS becomes larger (wider). The SCS is not limited to the spacing (frequency) illustrated in FIG. 3. For example, 480 kHz, 960 kHz, or the like may be used.

Note that the number of symbols constituting one slot may not necessarily be 14 symbols (for example, 28 or 56 symbols). Further, the number of slots for each subframe may vary depending on the SCS.

Note that the time direction (t) illustrated in FIG. 3 may be referred to as a time domain, a symbol period, symbol time, or the like. The frequency direction may be referred to as a frequency domain, a resource block, a sub-carrier, a bandwidth part (BWP), or the like.

A DMRS is a type of reference signal and is prepared for various channels. Here, unless otherwise specified, it may mean a DMRS for a downlink data channel, specifically, for a PDSCH (Physical Downlink Shared Channel). However, a DMRS for an uplink data channel, specifically, for a PUSCH (Physical Uplink Shared Channel), may be interpreted in the same way as a DMRS for a PDSCH.

The DMRS may be used in a device, for example, in the UE 200 for channel estimation as part of coherent demodulation. The DMRS may be present only in a resource block (RB) used for PDSCH transmission.

The DMRS may have multiple mapping types. Specifically, the DMRS has mapping type A and mapping type B. In mapping type A, a first DMRS is arranged on the second or third symbol of the slot. In mapping type A, the DMRS may be mapped based on the slot boundaries, regardless of where the actual data transmission starts in the slot. The reason why the first DMRS is arranged on the second or third symbol of the slot may be interpreted because the first DMRS is arranged after control resource sets (CORESET).

In mapping type B, a first DMRS may be arranged on the first symbol of the data allocation. That is, the position of the DMRS may be provided relative to where the data is arranged, rather than relative to the slot boundaries.

In addition, the DMRS may have multiple types. Specifically, the DMRS has Type 1 and Type 2. Type 1 and Type 2 differ in mapping in the frequency domain and in the maximum number of orthogonal reference signals. In Type 1, up to 4 orthogonal signals can be output with a single-symbol DMRS, and in Type 2, up to 8 orthogonal signals can be output with a double-symbol DMRS.

### (2) Functional block configuration of radio communication system 10

Next, a functional block configuration of the radio communication system 10 will be described.

First, a functional block configuration of the UE 200 will be described.

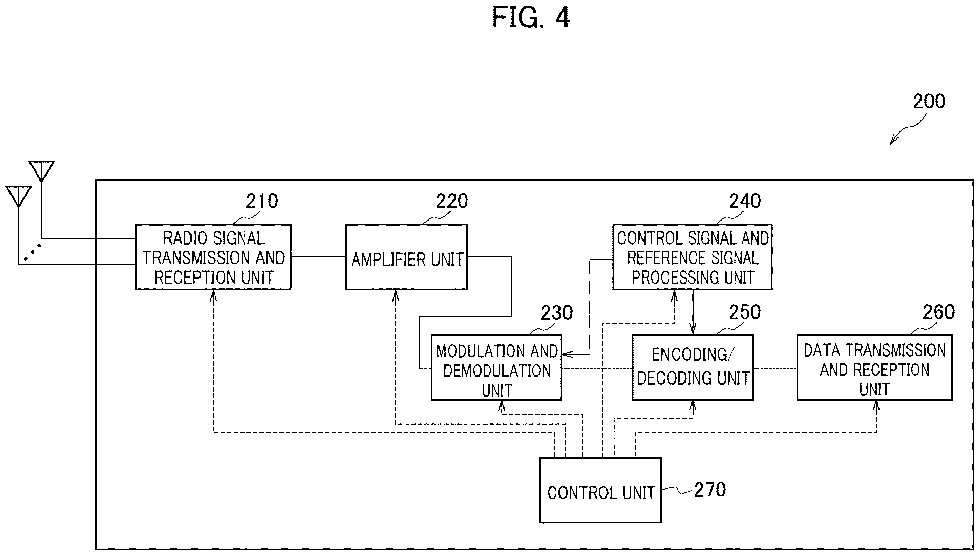

FIG. 4 is a functional block diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

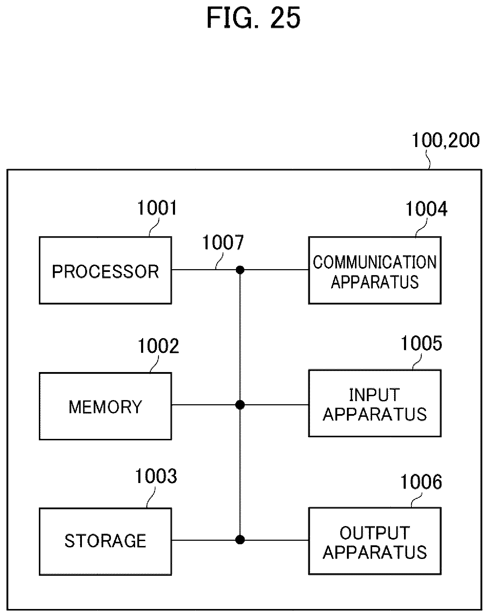

Note that only the main functional blocks related to the description of the embodiment are illustrated in FIG. 4, and the UE 200 includes other functional blocks (for example, power supply unit). In addition, FIG. 4 illustrates a functional block configuration of the UE 200, and please refer to FIG. 25 for a hardware configuration.

The radio signal transmission and reception unit 210 transmits and receives radio signals according to NR. The radio signal transmission and reception unit 210 supports Massive MIMO that generates a beam BM with high directivity by controlling radio (RF) signals transmitted from a plurality of antenna elements, carrier aggregation (CA) that uses a plurality of component carriers (CCs) bundled together, dual connectivity (DC) that simultaneously performs communication between the UE 200 and each of two NG-RAN nodes, and the like.

In the present embodiment, the radio signal transmission and reception unit 210 may include a communication unit that communicates with a base station forming a candidate cell that is a transition target. The candidate cell may be interpreted as a cell that is a candidate for a transition target for the UE 200.

The amplifier unit 220 includes a PA (Power Amplifier)/LNA (Low Noise Amplifier) and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation/demodulation, a transmission power configuration, a resource block allocation, and the like for each predetermined communication destination (gNB 100 or another gNB). Cyclic Prefix-Orthogonal Frequency Division Multiplexing (CP-OFDM)/Discrete Fourier Transform-Spread (DFT-S-OFDM) may be applied in the modulation and demodulation unit 230. In addition, the DFT-S-OFDM may be used not only for an uplink (UL), but also for a downlink (DL).

The control signal and reference signal processing unit 240 performs processing regarding various control signals transmitted and received by the UE 200, and processing regarding various reference signals transmitted and received by the UE 200.

Specifically, the control signal and reference signal processing unit 240 receives various control signals transmitted from the gNB 100 via a predetermined control channel, for example, the control signals for the radio resource control layer (RRC). The control signal and reference signal processing unit 240 also transmits various control signals to the gNB 100 via a predetermined control channel.

The control signal and reference signal processing unit 240 performs processing using a reference signal (RS), such as a demodulation reference signal (DMRS) and a phase tracking reference signal (PTRS). The DMRS is a UE 200-specific reference signal (pilot signal) for estimating a fading channel used for data demodulation, known between a base station and the UE 200. The PTRS is a UE 200-specific reference signal for the purpose of estimating phase noise which becomes a problem in a high frequency band.

The reference signals may include, in addition to the DMRS and the PTRS, a channel state information-reference signal (CSI-RS), a sounding reference signal (SRS), and a positioning reference signal (PRS) for positional information.

The channels include control channels and data channels. The control channels may include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI)), a Physical Broadcast Channel (PBCH), and the like.

In addition, the data channels may include a PDSCH (Physical Downlink Shared Channel), a PUSCH (Physical Uplink Shared Channel), and the like. Data refers to data transmitted via the data channel. The data channels may be read as shared channels.

The control signal and reference signal processing unit 240 may receive downlink control information (DCI). The DCI includes, as existing fields, fields for storing DCI Formats, a Carrier indicator (CI), a BWP indicator, an FDRA (Frequency Domain Resource Assignment), a TDRA (Time Domain Resource Assignment), an MCS (Modulation and Coding Scheme), an HPN (HARQ Process Number), an NDI (New Data Indicator), an RV (Redundancy Version), and the like.

The value stored in the DCI Format field is an information element to specify a format of the DCI. The value stored in the CI field is an information element to specify a CC to which the DCI is applied. The value stored in the BWP indicator field is an information element to specify a BWP to which the DCI is applied. The BWP that can be specified by a BWP indicator is configured by an information element (BandwidthPart-Config) included in an RRC message. The value stored in the FDRA field is an information element to specify a frequency domain resource to which the DCI is applied. The frequency domain resource is specified by a value stored in the FDRA field and an information element (RA Type) included in the RRC message. The value stored in the TDRA field is an information element to specify a time domain resource to which the DCI is applied. The time domain resource is specified by a value stored in the TDRA field and an information element (pdsch-TimeDomainAllocationList, pusch-TimeDomainAllocationList) included in the RRC message. The time domain resource may be specified by a value stored in the TDRA field, and by a default table. The value stored in the MCS field is an information element to specify an MCS to which the DCI is applied. The MCS is specified by a value stored in the MCS, and by an MCS table. The MCS table may be specified by an RRC message, or specified by RNTI scrambling. The value stored in the HPN field is an information element to specify a HARQ process to which the DCI is applied. The value stored in the NDI is an information element to specify whether the data to which the DCI is applied is the initial transmission data. The value stored in the RV field is an information element to specify the redundancy of data to which the DCI is applied.

In the present embodiment, the control signal and reference signal processing unit 240 may include a control unit that controls an execution of an addition/change procedure of a secondary cell.

In the present embodiment, the control signal and reference signal processing unit 240 may include a control unit that establishes security with a secondary node forming the secondary cell using the security information after executing the addition/change procedure.

In the present embodiment, the control signal and reference signal processing unit 240 may include a control unit that generates a security key for the secondary node using the security information.

The encoding/decoding unit 250 performs data division/concatenation, channel coding/decoding, and the like for each predetermined communication destination (gNB 100 or another gNB). Specifically, the encoding/decoding unit 250 divides the data output from the data transmission and reception unit 260 into predetermined sizes, and performs channel coding on the divided data. The encoding/decoding unit 250 also decodes the data output from the modulation and demodulation unit 230, and concatenates the decoded data.

The data transmission and reception unit 260 transmits and receives a protocol data unit (PDU) and a service data unit (SDU). Specifically, the data transmission and reception unit 260 performs assembly/disassembly of PDU/SDU in a plurality of layers (a media access control layer (MAC), a radio link control layer (RLC), a packet data convergence protocol layer (PDCP) and the like). In addition, the data transmission and reception unit 260 performs error correction and retransmission control of data based on HARQ (Hybrid Automatic Repeat Request).

In the present embodiment, the data transmission and reception unit 260 may include a reception unit that receives security information to be used in the addition/change procedure.

The control unit 270 controls each of functional blocks constituting the UE 200.

In the radio communication system 10, an SSB (SS/PBCH Block) constituted of a synchronization signal (SS) and a downlink physical broadcast channel (PBCH) may be used.

The SSB is mainly transmitted from the network periodically in order for the UE 200 to perform detection of cell ID and reception timing at the start of communication. In NR, the SSB is reused to measure the reception quality of each cell. 5, 10, 20, 40, 80, 160 milliseconds or the like may be defined as the transmission period (periodicity) of the SSB. The UE 200 for initial access may assume a transmission period of 20 milliseconds.

Second, a functional block configuration of the gNB 100 will be described.

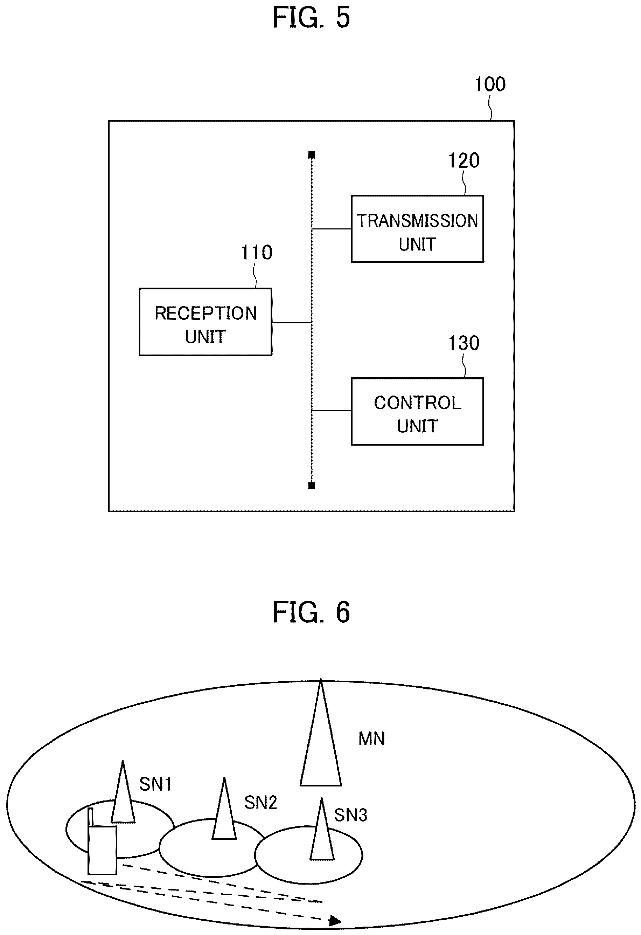

FIG. 5 is a functional block diagram of the gNB 100. As illustrated in FIG. 5, the gNB 100 includes a reception unit 110, a transmission unit 120, and a control unit 130.

The reception unit 110 receives various signals from the UE 200. The reception unit 110 may receive UL signals via PUCCH or PUSCH.

The transmission unit 120 transmits various signals to the UE 200. The transmission unit 120 may transmit DL signals via PDCCH or PDSCH. In the present embodiment, the transmission unit 120 may include a transmission unit that transmits security information to another radio base station or a terminal. The security information may include a security key and a counter value.

In the present embodiment, the transmission unit 120 may transmit the generated security information after executing the addition/change procedure.

In the present embodiment, the transmission unit 120 may include a transmission unit that transmits a message to a transition target secondary node for a terminal when executing the addition/change procedure, the message including information of a candidate secondary cell that is a transition target maintained by the terminal.

In the present embodiment, the transmission unit 120 may include a transmission unit that transmits a message to a transition target secondary node for a terminal, the message including an indication indicating whether the terminal maintains configuration information of a transition source secondary cell.

In the present embodiment, the transmission unit 120 may include a transmission unit that transmits a message to a terminal, the message including an indication indicating whether the terminal needs to maintain an execution condition for the addition/change procedure after executing the addition/change procedure.

In the present embodiment, the transmission unit 120 may include a transmission unit that transmits a message to a terminal, the message including an indication indicating that the addition/change procedure is initiated by a master node or the addition/change procedure is initiated by a secondary node.

In the present embodiment, the transmission unit 120 may include a transmission unit that transmits a message to a terminal, the message including an indication indicating an execution condition for the addition/change procedure configured by a master node, or an execution condition for the addition/change procedure configured by a secondary node.

The control unit 130 controls the gNB 100. In the present embodiment, the control unit 130 may include a control unit that generates security information to be used in an addition/change procedure of a secondary cell.

### (3) Operation of radio communication system 10

Next, operation of the radio communication system 10 will be described. Specifically, an operation example of the radio communication system 10 including the gNB 100 and the UE 200 that can appropriately control the maintenance or discard of the configuration information will be described.

### (3.1) Assumption and problem

A problem in changing the security information of a secondary cell safely and reliably even when selective activation is applied will be described with reference to FIG. 6. FIG. 6 is a diagram for explaining a first problem when the gNB 100 or the UE 200 appropriately controls the maintenance or discard of the configuration information.

FIG. 6 illustrates the UE 200 that can transition between multiple candidate cells (SN1, SN2, and SN3). FIG. 6 illustrates how the user's UE 200 transitions between one or more specific candidate cells while the user moves to a specific position. In this case, the UE 200 is likely to repeatedly transition to multiple candidate cells near the facility.

In 3GPP Release 17, a simplified addition/change procedure of a conditional secondary cell (secondary node) (CPAC: conditional PSCell addition/change) is specified so as to achieve an addition or a change of a primary SCell (PSCell) more efficiently. Further, in 3GPP Release 18, regarding NR-NR Dual Connectivity (NR-DC), a method for maintaining a CPAC configuration without releasing the configuration each time the CPAC is performed (it may be called selective activation) has been studied (Non-Patent Literature 1 described above). This makes it possible to change a cell group (CG) more flexibly while avoiding reconfiguring and restarting the CPAC. Meanwhile, it is pointed out that the application of such selective activation may cause security problems (Non-Patent Literature 2 described above).

When selective activation is applied, a terminal (User Equipment, UE) can maintain the configuration of a candidate secondary cell that is a transition target after executing the CPAC. Therefore, in the situation illustrated in FIG. 6, rapid cell transition becomes possible, thereby improving the mobility of the UE.

However, it is necessary to change security information (security key, or the like) for each secondary cell, and thus there is a problem that it is difficult to change the security information safely.

Specifically, since there is a requirement to change a security key each time a PSCell change is performed over the gNB-CU, it is necessary to store the cell configuration of a candidate SN after UE CPC is completed, and to update a security key of the secondary node when executing the next CPC. The inventors and the like, after careful consideration, have found a security key update method.

To solve such a problem, a plurality of operation examples described below are considered. It should be noted that each of the plurality of operation examples described below may be used independently, or may be used in combination with two or more of them.

### (3.2) Operation example

An operation example will be described below that can solve the problem illustrated in FIG. 6.

### (3.2.0) Outline of operation

### (1) Example 1 and Example 4

After completion of CPC/CPA, the MN may increment an sk counter (secondary key counter), and further, the MN may calculate a new SN security key and transmit the new SN security key to a candidate SN(s).

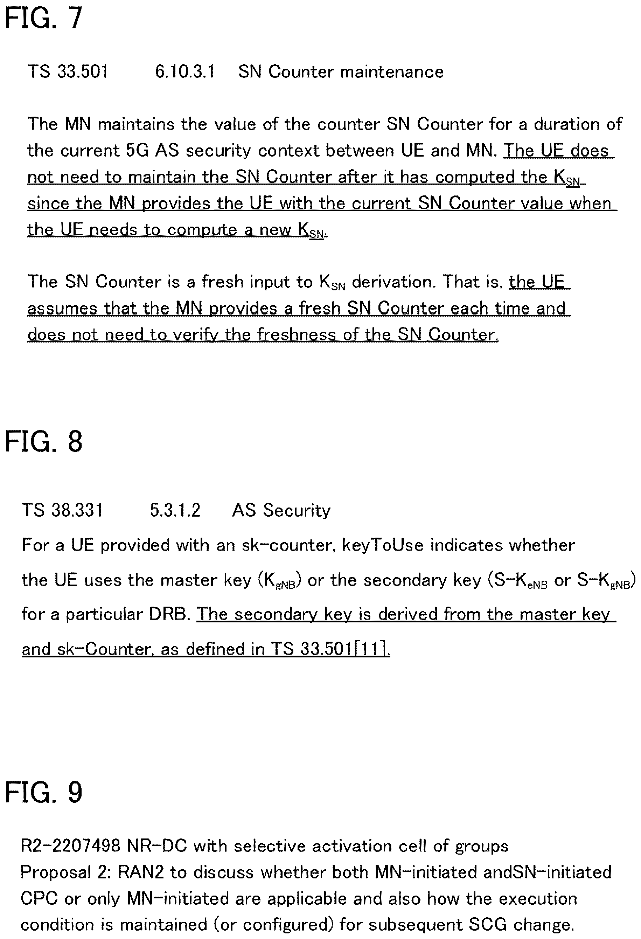

The MN may transmit a new sk counter (incremented sk counter) to UE by means of RRCReconfiguration. The UE may calculate a new SN-side security key based on the new sk counter and a master key received from the MN (in the method underlined in FIG. 8, the secondary key is introduced by the master key and sk counter).

### (2) Example 2, Example 5, and Example 11

After completion of CPC/CPA, the MN increments an sk counter and further calculates a new SN security key. The MN may transmit the new SN security key to a candidate SN(s). After completion of CPC/CPA, the UE may store an sk counter value (in the existing specification illustrated in FIG. 7, the UE does not store the SN counter as illustrated in the underlined part). The MN may transmit to the UE, an indication indicating whether to store the sk counter value. The MN may transmit a command to increment the sk counter to the UE by means of MAC CE or PDCCH (example 2 and example 5). The command may be a comment to start selective activation (example 11).

The command may include an indication to explicitly increment the sk counter or an indication indicating how many steps should be incremented (for example, in a case where sk counter = 1, when incrementing two steps, sk counter = 3. If the command does not include an indication indicating how many steps should be incremented, it may be assumed to increment one step implicitly).

The updated sk counter may be reported to the MN. If the sk counter reported by the UE differs from that of the MN side, the MN may transmit a command to increment the sk counter again. The UE may calculate a new SN security key based on the new sk counter.

### (3) Example 3 and Example 6

After completion of CPC/CPA, the MN may increment an sk counter, calculate a new SN security key, and transmit the new SN security key to a candidate SN(s). After completion of CPC/CPA, the UE may store an sk counter value. The MN may transmit to the UE, an indication indicating whether to store the sk counter value. The UE may increment the sk counter value that was stored autonomously after completion of CPC/CPA (for example, in a case where sk counter = 1, when autonomously incrementing one step, sk counter = 2). The updated sk counter may be reported to the MN. If the sk counter reported by the UE differs from that of the MN side, the MN may transmit a command to increment the sk counter. The UE may calculate a new SN security key based on the new sk counter.

### (3.2.1) Operation example 1

In the operation example 1, the operations of examples 1 to 6 and 11 will be described.

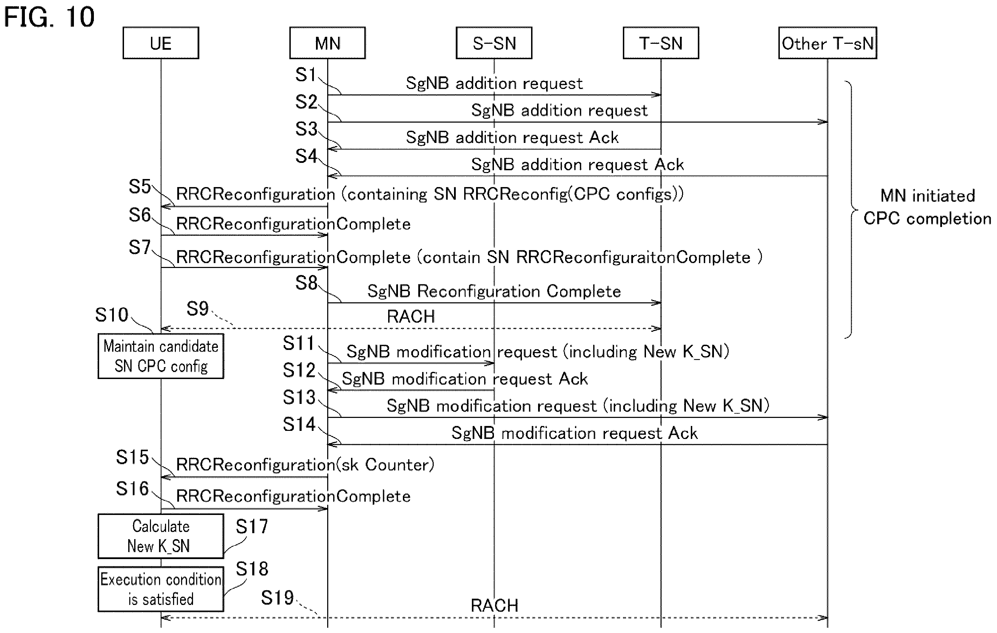

FIG. 10 is a diagram for explaining a communication sequence example of the operation example 1 (example 1).

In step S1 and step S2, the MN may transmit an SgNB addition request to the T-SN and the other candidate cell (other Candidate T-SN). In step S3 and step S4, the T-SN and the other candidate cell may transmit an SgNB addition request Ack to the MN.

In step S5, the MN may transmit RRCReconfiguration to the UE. The RRCReconfiguration may include SN RRCReconfiguration and/or CPC configuration.

In step S6, the UE may transmit a response message to RRCReconfiguration (RRCReconfigurationComplete) to the MN.

In step S7, the UE may transmit a response message to SN RRCReconfiguration (SN RRCReconfiguraitonComplete) to the MN.

In step S8, the MN that has received RRCReconfigurationComplete and/or SN RRCReconfiguraitonComplete may transmit SgNB ReconfigurationComplete to the S-SN.

Thus, in step S9, a RACH (Random Access Channel) is configured between the UE and the T-SN.

The MN initiated CPC is completed by the sequence of step S1 to step S9.

When the RACH (Random Access Channel) is configured between the UE and the T-SN, the UE maintains the CPC config of a candidate SN (maintain candidate SN CPC config) in step S10.

In step S11, the MN may transmit an SgNB modification request to the S-SN. The SgNB modification request may include a New K_SN. The New K_SN may be interpreted as a new security key to be used on the secondary node side.

In step S12, the S-SN may transmit an SgNB modification request Ack to the MN.

In step S13, the MN may transmit an SgNB modification request to the other candidate cell (other Candidate T-SN). The SgNB modification request may include a New K_SN.

In step S14, the other candidate cell may transmit an SgNB modification request Ack to the MN.

In step S15, the MN may transmit a message indicating an sk Counter (RRCReconfiguration (sk Counter)) to the UE.

In step S16, the UE may transmit a response message to RRCReconfiguration (RRCReconfigurationComplete) to the MN.

In step S17, the UE may calculate a new SN-side security key based on the sk Counter (calculate New K_SN).

When an execution condition is satisfied in step S18, a RACH (Random Access Channel) is configured between the UE and the other candidate cell (other Candidate T-SN) in step S19.

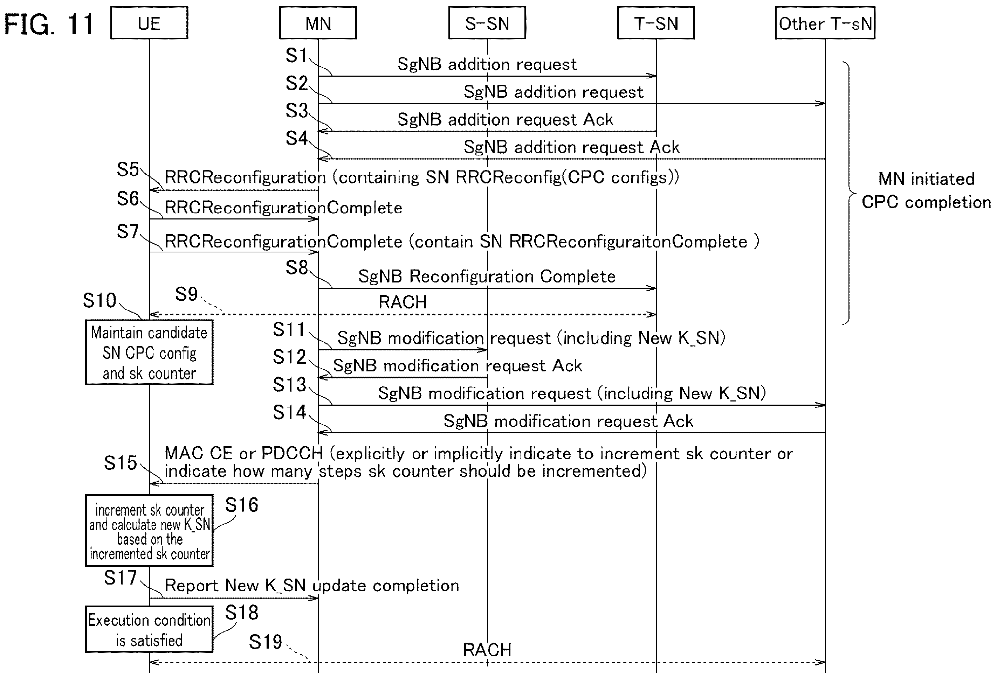

FIG. 11 is a diagram for explaining a communication sequence example of the operation example 1 (example 2).

The sequence of step S1 to step S9 in FIG. 11 is the same as the sequence of step S1 to step S9 in FIG. 10, and thus a description thereof will be omitted below.

When a RACH (Random Access Channel) is configured between the UE and the T-SN in step S9, the UE maintains the CPC config of a candidate SN, and an sk counter in step S10 (maintain candidate SN CPC config and sk counter).

The sequence of step S11 to step S14 in FIG. 11 is the same as the sequence of step S11 to step S14 in FIG. 10, and thus a description thereof will be omitted below.

In step S14, the MN that has received an SgNB modification request Ack from the other candidate cell may transmit an indication to increment an sk counter to the UE by means of MAC CE or PDCCH in step S15. The indication may include an indication to explicitly or implicitly increment the sk counter, an indication indicating how many steps the sk counter should be incremented, or the like (explicitly or implicitly indicate to increment sk counter or indicate how many steps sk counter should be incremented).

In step S16, the UE increments the sk counter and calculates a new K_SN based on the incremented sk counter (increment sk counter and calculate new K_SN based on the incremented sk counter).

In step S17, the UE may transmit to the MN, a message indicating the New K_SN update completion (that is, report the New K_SN update completion). The sequence of step S18 and step S19 in FIG. 11 is the same as that in FIG. 10, and thus a description thereof will be omitted below.

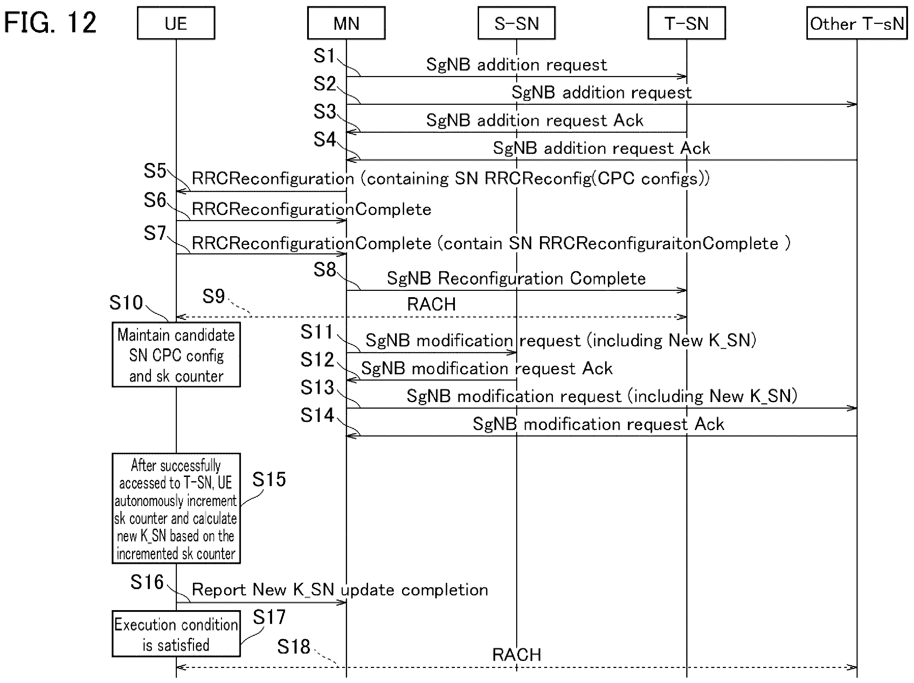

FIG. 12 is a diagram for explaining a communication sequence example of the operation example 1 (example 3).

The sequence of step S1 to step S14 in FIG. 12 is the same as the sequence of step S1 to step S14 in FIG. 11, and thus a description thereof will be omitted below. In FIG. 12, the sequence of step S15 and step S16 illustrated in FIG. 11 is omitted.

After successful access to the T-SN, in step S15, the UE that has completed the processing of step S10 illustrated in FIG. 12 autonomously increments the sk counter and calculates a New K_SN based on the incremented sk counter (After successfully accessed to T-SN, UE automatically increment sk counter and calculate new K_SN based on the incremented sk counter).

In step S16, the UE reports the New K_SN update completion to the MN. The sequence of step S17 and step S18 illustrated in FIG. 12 is the same as the sequence of step S18 and step S19 illustrated in FIG. 11, and thus a description thereof will be omitted below.

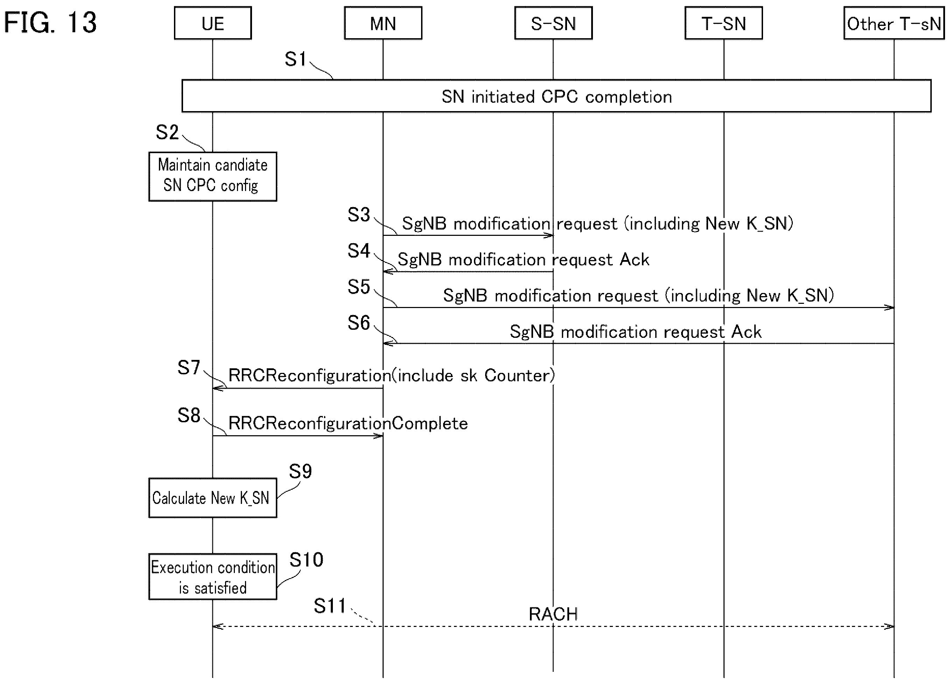

FIG. 13 is a diagram for explaining a communication sequence example of the operation example 1 (example 4).

When SN initiated CPC is completed in step S1, the UE maintains CPC config of a candidate SN (maintain candidate SN CPC config) in step S2.

Further, when the SN initiated CPC is completed, the MN may transmit an SgNB modification request to the S-SN in step S3. The request may include a New K_SN.

In step S4, the S-SN may transmit an SgNB modification request Ack to the MN.

In step S5, the MN may transmit the SgNB modification request to the other candidate cell. The request may include the New K_SN.

In step S6, the other candidate cell may transmit the SgNB modification request Ack to the MN.

In step S7, the MN may transmit a message indicating an sk Counter (RRCReconfiguration (include sk Counter)) to the UE.

In step S8, the UE may transmit a response message to RRCReconfiguration (RRCReconfigurationComplete) to the MN.

In step S9, the UE may calculate a new SN-side security key based on the sk Counter (calculate New K_SN). The sequence of step S10 and step S11 in FIG. 13 is the same as the sequence of step S17 and step S18 in FIG. 12, and thus a description thereof will be omitted below.

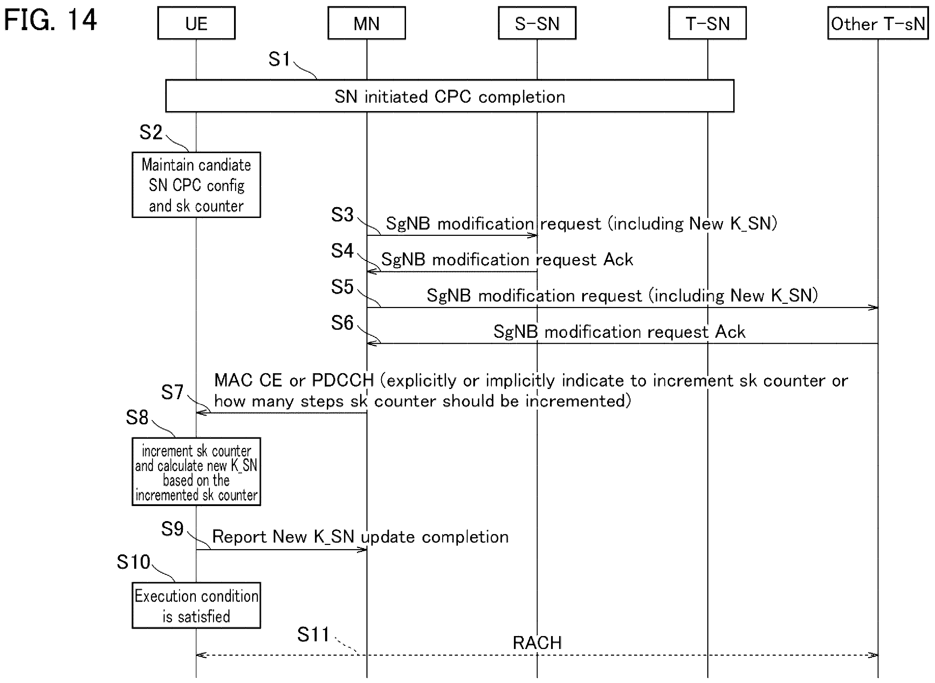

FIG. 14 is a diagram for explaining a communication sequence example of the operation example 1 (example 5).

The sequence of step S1 to step S6 in FIG. 14 is the same as the sequence of step S1 to step S6 in FIG. 13, and thus a description thereof will be omitted below.

In step S7, the MN may transmit an indication to increment an sk counter by means of MAC CE or PDCCH. The indication may include an indication to increment the sk counter explicitly or implicitly, an indication indicating how many steps the sk counter should be incremented, or the like.

In step S8, the UE increments the sk counter and calculates a new K_SN based on the incremented sk counter (increment sk counter and calculate new K_SN based on the incremented sk counter).

In step S9, the UE may transmit to the MN, a message indicating the new K_SN update completion (that is, report the New K_SN update completion).

The sequence of step S10 and step S11 in FIG. 14 is the same as the sequence of step S10 and step S11 in FIG. 13, and thus a description thereof will be omitted below.

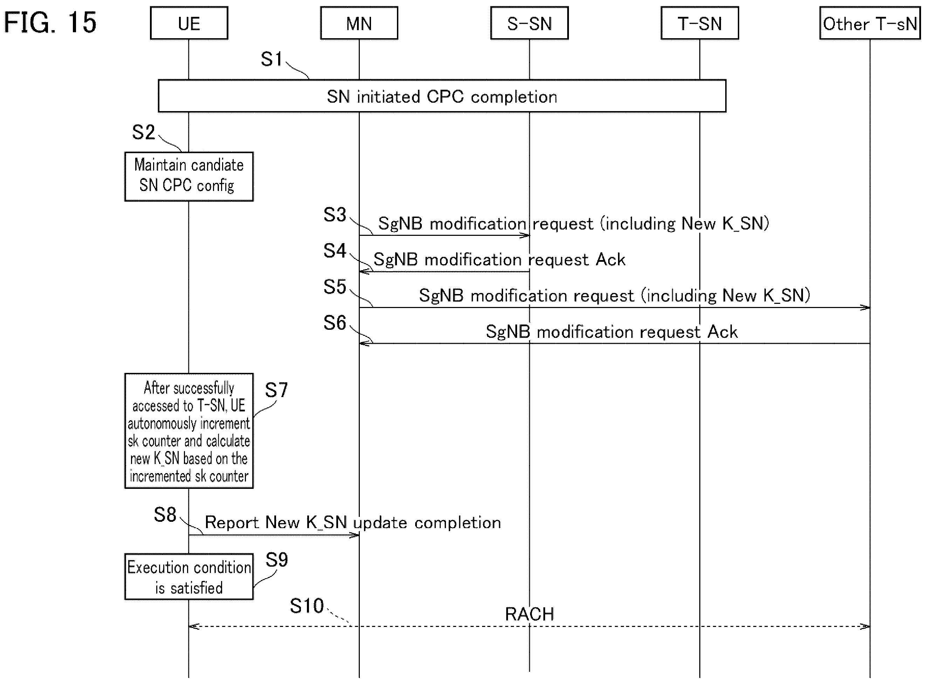

FIG. 15 is a diagram for explaining a communication sequence example of the operation example 1 (example 6).

The sequence of step S1 to step S6 in FIG. 15 is the same as the sequence of step S1 to step S6 in FIG. 14, and thus a description thereof will be omitted below.

In step S7 illustrated in FIG. 15, the UE increments an sk counter autonomously after successful access to the T-SN, and calculates a new K_SN based on the incremented sk counter (After successfully accessed to T-SN, UE automatically increment sk counter and calculate new K_SN based on the incremented sk counter).

In step S8, the UE may transmit to the MN, a message indicating the New K_SN update completion (that is, report the New K_SN update completion). The sequence of step S9 and step S10 in FIG. 15 is the same as the sequence of step S10 and step S11 in FIG. 14, and thus a description thereof will be omitted below.

### <Additional note on operation example 1>

The terminal or the base station of the present embodiment may be configured as a terminal or a base station described in the following sections.

### (Section 1)

A radio base station including:
a control unit that generates security information to be used in an addition/change procedure of a secondary cell; and
a transmission unit that transmits the security information to another radio base station or a terminal, wherein
the transmission unit transmits the generated security information after executing the addition/change procedure.

### (Section 2)

A terminal including:
a control unit that controls an execution of an addition/change procedure of a secondary cell; and
a reception unit that receives security information to be used in the addition/change procedure, wherein
the control unit establishes security with a secondary node that forms the secondary cell using the security information after executing the addition/change procedure.

### (Section 3)

The terminal according to claim 2,
wherein the control unit generates a security key for the secondary node using the security information.

### (Other problems)

Another problem (second problem 1) of the present invention is that when selective activation is applied, in the case of a secondary cell change procedure (CPC) initiated by a secondary node, the terminal (User Equipment, UE) needs to reconfigure a candidate secondary cell that is a transition target after executing the CPC. However, a new secondary node (which may mean a target secondary node) to which the UE has transitioned cannot recognize the information of the candidate secondary cell that is the transition target maintained by the UE. Therefore, there is a problem that it is difficult for the secondary node to configure an execution condition for the CPC. Specifically, in the case of SN initiated CPC, the UE stores the cell configuration of a candidate SN after completion of CPC, but an execution condition for each candidate PSCell is configured by a source SN and needs to be reconfigured by a newly accessed SN (T-SN) (execution condition needs to be configured based on the quality of source PScell on the T-SN side). However, the newly accessed SN (T-SN) does not know which candidate PSCell(s) the UE stores, causing a problem in how to reconfigure the execution condition.

Another problem (second problem 2) of the present invention is that the secondary node cannot recognize whether the UE maintains the configuration of a transition source secondary node (which may mean a source secondary node), and/or the secondary node cannot recognize the identification information (cell ID) of a secondary cell formed by the transition source secondary node. Therefore, there is a problem that it is difficult for the secondary node to configure an execution condition for the CPC. Specifically, the T-SN does not know whether the UE stores the cell config of a source SN, and/or the T-SN does not know a source PScell ID, causing a problem that the execution for the source PScell cannot be configured.

Another problem (third problem) of the present invention is that in the case of MN initiated CPC or CPA, the UE needs to store both a candidate SN cell configuration and an execution condition after completion of CPC/CPA (reason: in the case of MN initiated CPC/CPA, since the execution condition is configured by the MN, the execution condition is valid as long as the MN does not change). Meanwhile, in the case of SN initiated CPC, the UE only stores a candidate SN cell configuration after completion of CPC (reason: in the case of SN initiated CPC, since the execution condition is configured by the S-SN and the S-SN changes to the T-SN, and the execution condition configured by the S-SN becomes invalid). However, the CPA/CPC config is merely RRCRReconfiguration for the UE, and thus the UE cannot distinguish between MN initiated CPC or CPA, and SN initiated CPC. Therefore, the UE cannot determine whether to store the execution condition. This problem is mentioned in P2 in R2-2207498 (see FIG. 9).

### (3.2.2) Operation example 2

To solve the second problem 1 and second problem 2 described above, a plurality of operation examples described below are considered. It should be noted that each of the plurality of operation examples described below may be used independently, or may be used in combination with two or more of them.

### (3.2.2.1) Operation example 2-1

An operation example that can solve the second problem 1 will be described below. The MN configures the configuration and an execution condition for a candidate PSCell(s) to the UE, and thus the MN knows which candidate PSCell(s) the UE stores. The MN may notify the T-SN of a cell ID and carrierFreq (ARFCN-valueNR) of the candidate PSCell(s) stored by the UE via the SgNB reconfiguration complete message (another message may be also possible). In addition, the MN may notify the T-SN of an execution condition configured by the S-SN (Source SN (secondary node)) via the SgNB reconfiguration complete message. The T-SN may refer to the candidate PSCell(s) and the execution condition transmitted from the MN, and create a new execution condition. See example #7. Alternatively, the UE may notify the T-SN of the stored candidate PSCell(s). The T-SN may refer to the candidate PSCell(s) transmitted from the UE, and create a new execution condition.

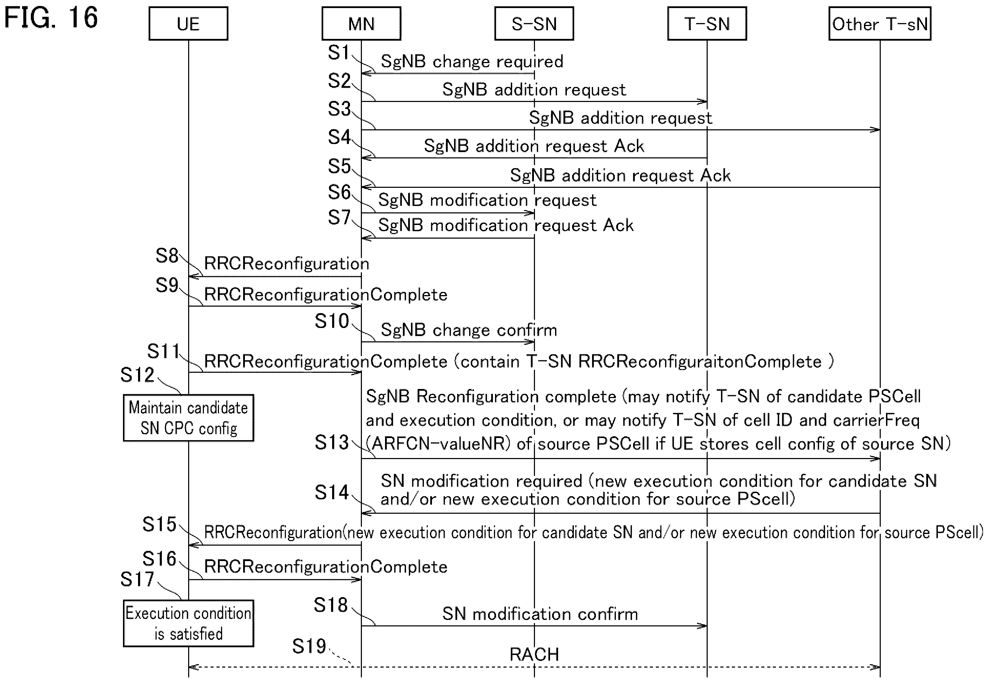

FIG. 16 is a diagram for explaining a communication sequence example of operation example 2-1 (example 7).

In step 1, the S-SN may transmit a message related to the SgNB change request (SgNB change required) to the MN.

In step S2 and step S3, the MN may transmit an SgNB addition request to the T-SN and the other candidate cell (other Candidate T-SN).

In step S4 and step S5, the T-SN and the other candidate cell may transmit an SgNB addition request Ack to the MN.

In step S6, the MN may transmit an SgNB modification request to the S-SN. In step S7, the S-SN may transmit an SgNB modification request Ack to the MN. In step S8, the MN may transmit RRCReconfiguration to the UE. In step S9, the UE may transmit RRCReconfigurationComplete to the MN.

In step S10, the MN may transmit to the S-SN, a message indicating that the SgNB change has been confirmed (SgNB change confirm).

In step S11, the UE may transmit to the MN, RCRReconfigurationComplete including T-SN RCRReconfiguraitonComplete.

In step S12, the UE maintains the CPC config of a candidate SN (maintain candidate SN CPC config).

In step S13, the MN may transmit to the T-SN, a message related to SgNB Reconfiguration complete. The message may include a candidate PSCell and an execution condition. The message may include a cell ID and carrierFreq (ARFCN-valueNR) of a source PSCell if the UE stores the cell config of a source SN.

In step S14, the T-SN may transmit a SN modification required to the MN. The SN modification required may include a new execution condition for the candidate SN and a new execution condition for the source PSCell (new execution condition for candidate SN and/or new execution condition for source PSCell).

In step S15, the MN may transmit RRCReconfiguration to the UE. The RRCReconfiguration may include a new execution condition for the candidate SN and a new execution condition for the source PSCell (new execution condition for candidate SN and/or new execution condition for source PSCell).

In step S16, the UE may transmit RRCReconfigurationComplete to the MN. In step S18, the MN may transmit a message related to SN modification confirmation (SN modification confirm) to the T-SN. The sequence of step S17 and step S19 in FIG. 16 is the same as the sequence of step S18 and step S19 in FIG. 10, and thus a description thereof will be omitted below.

### (3.2.2.2) Operation example 2-2

An operation example that can solve the second problem 2 will be described below. The MN configures whether the UE stores the cell config of a source SN, and thus the MN knows whether the UE stores the cell config of the source SN. The MN may notify the T-SN whether the UE stores the cell config of the source SN via the SgNB reconfiguration complete message (another message may be also possible). The MN may notify the T-SN of a cell ID and carrierFreq (ARFCN-valueNR) of the source PSCell stored in the UE via the SgNB reconfiguration complete message (another message may be also possible). Alternatively, the UE may notify the T-SN whether the UE stores the cell config of the source SN. If the UE stores the cell config of the source SN, the UE may notify the T-SN of the cell ID and carrierFreq (ARFCN-valueNR) of the source PSCell. The T-SN may configure an execution condition based on the cell ID and carrierFreq (ARFCN-valueNR) of the source PSCell notified from the MN or UE.

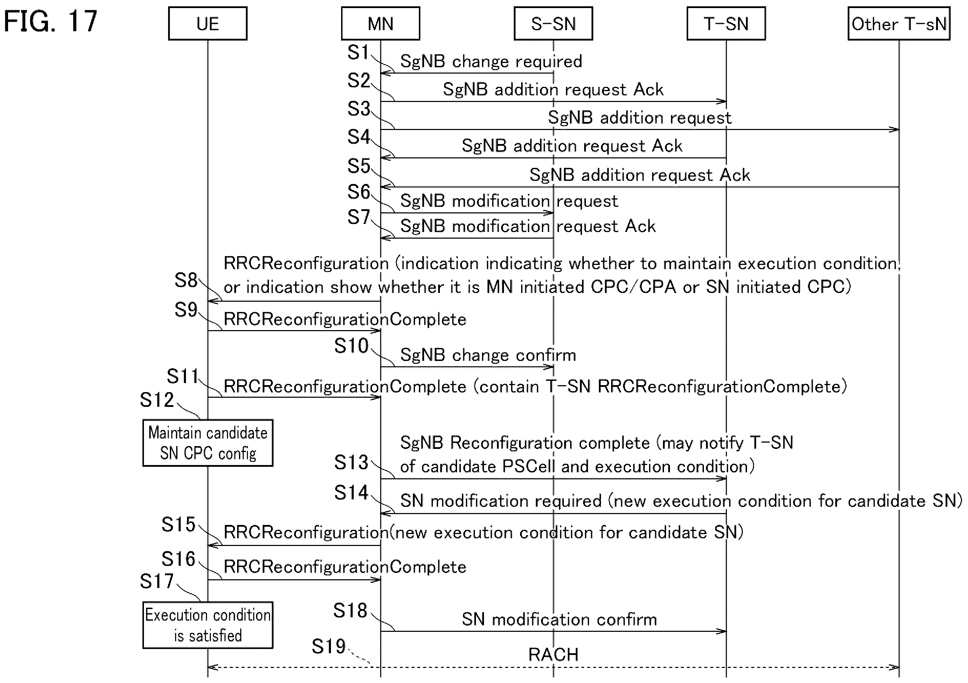

FIG. 17 is a diagram for explaining a communication sequence example of operation example 2-2 (example 9).

The sequence of step S1 to step S7 in FIG. 17 is the same as the sequence of step S1 to step S7 in FIG. 16, and a description thereof will be omitted below. In step S8, the MN may transmit RRCReconfiguration to the UE. The RRCReconfiguration may include an indication indicating whether to maintain an execution condition. The RRCReconfiguration may include an indication indicating whether the CPC/CPA is initiated by MN or the CPC is initiated by SN (indication show whether it is MN initiated CPC/CPA or SN initiated CPC).

The sequence after step S9 in FIG. 17 is the same as the sequence after step S9 in FIG. 16, and thus a description thereof will be omitted below.

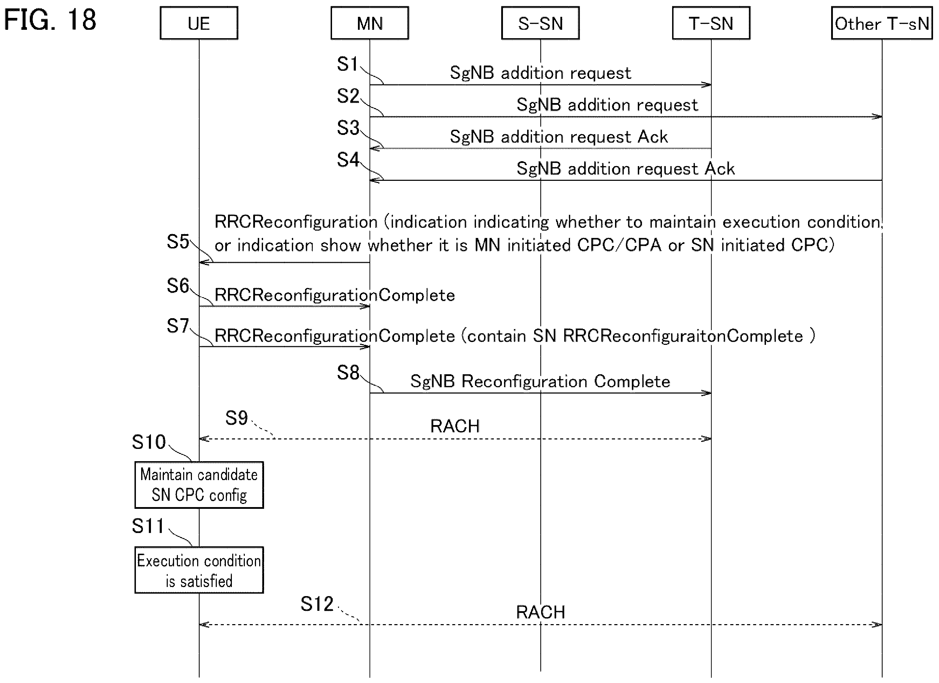

FIG. 18 is a diagram for explaining a communication sequence example of operation example 2-2 (example 10).

The sequence of step S1 to step S4 in FIG. 18 is the same as the sequence of step S1 to step S4 in FIG. 10, and a description thereof will be omitted below. In step S5, the MN may transmit RRCReconfiguration to the UE. The RRCReconfiguration may include an indication indicating whether to maintain an execution condition. The RRCReconfiguration may include an indication indicating whether the CPC/CPA is initiated by MN or the CPC is initiated by SN (indication show whether it is MN initiated CPC/CPA or SN initiated CPC).

In step S6, the UE may transmit RRCReconfigurationComplete to the MN. In step S7, the UE may transmit to the MN, RRCReconfigurationComplete including SN RRCReconfiguraitonComplete.

In step S8, the MN may transmit SgNB Reconfiguration Complete to the S-SN. In step S9, when a RACH (Random Access Channel) is configured between the UE and the T-SN, in step S10, the UE maintains the CPC config of a candidate SN (maintain candidate SN CPC config). The sequence after step S11 in FIG. 18 is the same as the sequence after step S17 in FIG. 17, and thus a description thereof will be omitted below.

### (3.2.2.2) Operation example 2-3

An operation example that can solve the first problem and the third problem will be described. When the MN transmits the RRCRReconfiguration or selective activation command of the CPC/CPA to the UE, an indication may be included in the RRCRReconfiguration (example #10) or in the selective activation command (example #11) of the CPC/CPA to indicate whether the UE maintains an execution condition after completion of the CPC/CPA. Alternatively, an indication may be included to indicate the MN initiated CPC/CPA or the SN initiated CPC. In the case of the MN initiated CPC/CPA, the UE maintains the execution condition after completion of the CPC/CPA. In the case of the SN initiated CPC, the UE discards the execution condition after completion of the CPC. Alternatively, an indication may be included to indicate the execution condition configured by the MN or indicate the execution condition configured by the SN. In the case of the execution condition configured by the MN, the UE maintains the execution condition after completion of the CPC/CPA. In the case of the execution condition configured by the SN, the UE discards the execution condition after completion of the CPC.

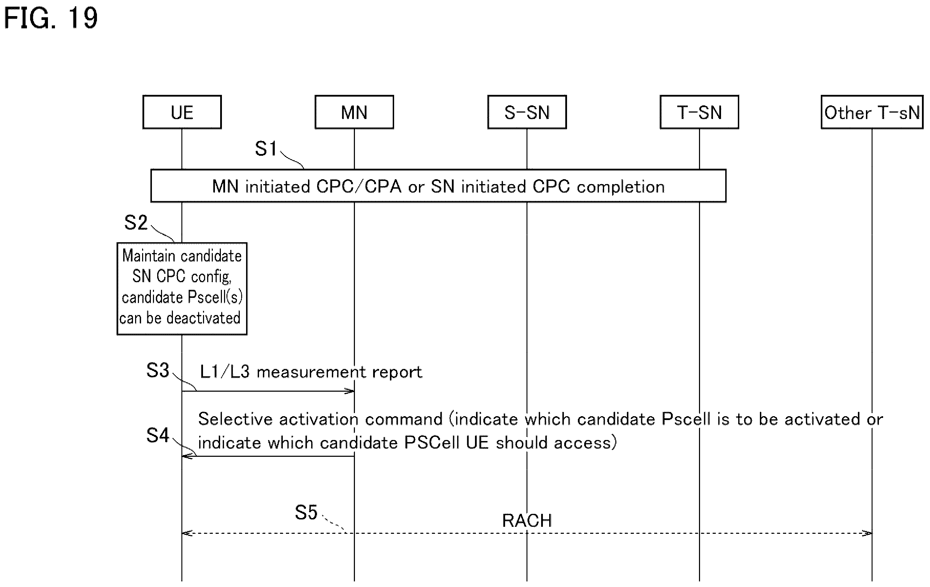

FIG. 19 is a diagram for explaining a communication sequence example of the operation example 1 and operation example 2-2 (example 11).

When the SN initiated CPC is completed in step S1, the UE may maintain the CPC config of a candidate SN (maintain candidate SN CPC config), and deactivate a candidate PSCell(s) in step S2 (candidate PSCell(s) can be deactivated).

In step S3, the UE may transmit L1/L3 measurement report to the MN.

In step S4, the MN may transmit a selective activation command to the UE. The selective activation command may be interpreted as an indication indicating which candidate PSCell is to be activated or which candidate PSCell the UE should access (indicate which candidate PSCell is to be activated or indicate which candidate PSCell UE should access) .

In step S5, a RACH (Random Access Channel) is configured between the UE and the other candidate cell (other Candidate T-SN).

### <Additional note on operation example 2>

The terminal or the base station of the present embodiment may be configured as a terminal or a base station described in the following sections.

### (Section 1)

A radio base station including:
a control unit that controls an execution of an addition/change procedure of a secondary cell; and
a transmission unit that transmits a message to a transition target secondary node for a terminal when executing the addition/change procedure, the message including information of a candidate secondary cell that is a transition target maintained by the terminal.

### (Section 2)

A radio base station including:
a control unit that controls an execution of an addition/change procedure of a secondary cell; and
a transmission unit that transmits a message to a transition target secondary node for a terminal, the message including an indication indicating whether the terminal maintains configuration information of a transition source secondary cell.

### (Section 3)

A radio base station including:
a control unit that controls an execution of an addition/change procedure of a secondary cell; and
a transmission unit that transmits a message to a terminal, the message including an indication indicating whether the terminal needs to maintain an execution condition for the addition/change procedure after executing the addition/change procedure.

### (Section 4)

A radio base station including:
a control unit that controls an execution of an addition/change procedure of a secondary cell; and
a transmission unit that transmits a message to a terminal, the message including an indication indicating that the addition/change procedure is initiated by a master node or the addition/change procedure is initiated by a secondary node.

### (Section 5)

A radio base station including:
a control unit that controls an execution of an addition/change procedure of a secondary cell; and
a transmission unit that transmits a message to a terminal, the message including an indication indicating an execution condition for the addition/change procedure configured by a master node, or an execution condition for the addition/change procedure configured by a secondary node.

### (4) Operation and effect

### (4.1) Operation and effect of operation example 1

According to the embodiment described above, the following operation and effect are acquired. Specifically, a security key update method at the time of PSCell mobility performed over the gNB-CU is proposed in NR-DC selective activation, and the security issue concern in the realization of the NR-DC selective activation function is solved.

### (4.2) Operation and effect of operation example 2

According to the embodiment described above, the following operation and effect are acquired. Specifically, in NR-DC selective activation, in order for the target SN to configure a new execution condition, a method in which the candidate PSCell ID or source PSCell ID stored by the UE is notified from the MN/UE is proposed. As a result, the target SN can configure the execution condition, which is expected to be useful for realizing the NR-DC selective activation function. Further, in NR-DC selective activation, a clear indication is proposed as to whether the UE stores the execution condition after the completion of MN initiated CPC/CPA or SN initiated CPC, which is expected to be useful for realizing the NR-DC selective activation function.

### (5) Other embodiments

Although the embodiment has been described above, it is obvious to those skilled in the art that the present invention is not limited to the description of the embodiment and that various modifications and improvements thereof are possible.

In the above description, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

In the present disclosure, the terms such as "precoding", "precoder", "weight (precoding weight)", "quasi-co-location (QCL)", "Transmission Configuration Indication state (TCI state)", "spatial relation", "spatial domain filter", "transmission power", "phase rotation", "antenna port", "antenna port group", "layer", "the number of layers", "rank", "resource", "resource set", "resource group", "beam", "beam width", "beam angle", "antenna", "antenna element", "panel", and so on can be used interchangeably.

The block diagrams (FIGs. 4 and 5) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but the functions are by no means limited to these. For example, a functional block (component) to implement a function of transmission may be referred to as a "transmitting section (transmitting unit)," a "transmitter". The method for implementing each component is not particularly limited as described above.

Furthermore, the above-described gNB 100, UE 200 (the apparatus) and AMF may function as a computer that executes the processes of the radio communication method of the present disclosure. FIG. 25 is a diagram to show an example of a hardware structure of the gNB 100 and UE 200. As shown in FIG. 25, the apparatus may each be formed as a computer apparatus that includes a processor 1001, a memory 1002, a storage 1003, a communication apparatus 1004, an input apparatus 1005, an output apparatus 1006, a bus 1007, and so on.

Note that in the following description, the word such as an apparatus can be read as a circuit, a device, a section, a unit, and so on. The hardware structure of the apparatus may be configured to include one or more of apparatuses shown in the drawings, or may be configured not to include part of apparatuses.

Each function of the apparatus (see FIGs. 4 and 5) is implemented by one of hardware elements or the combination of the hardware elements in the computer apparatus.

Each function of the apparatus is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The above-described various processes may be performed by a single processor 1001, or may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and so on. The memory 1002 may be referred to as a "register," a "cache," a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of a compact disc (Compact Disc ROM (CD-ROM) and so on), a hard disk drive, a flexible disk, a magneto-optical disk (for example, a compact disc, a digital versatile disc, a Blu-ray (registered trademark) disk), a smart card, a flash memory device (for example, a card, a stick, and a key drive), a floppy (registered trademark) disk, a magnetic stripe, and so on. The storage 1003 may be referred to as "auxiliary storage apparatus." The above recording medium may be a database including at least one of the memory 1002 and the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card, " a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that performs output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, pieces of apparatus, including the processor 1001, the memory 1002, and others, are connected by a bus 1007 for communicating information. The bus 1007 may be formed with a single bus, or may be formed with buses that vary between pieces of apparatus.

Also, the apparatus may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, RRC signaling, Medium Access Control (MAC) signaling), broadcast information (master information block (MIB), system information block (SIB)), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), New radio access (NX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Specific operations which have been described in the present disclosure to be performed by the gNB 100 may, in some cases, be performed by an upper node thereof. In a network including one or a plurality of network nodes with the gNB 100, it is clear that various operations that are performed to communicate with the UE 200 can be performed by the gNB 100 and other network nodes (for example, Mobility Management Entities (MMEs), Serving-Gateways (S-GWs), and so on may be possible, but these are not limiting) other than the gNB 100, or combinations of these. According to the above, a case is described in which there is a single network node other than the gNB 100. However, a combination of multiple other network nodes may be considered (e.g., MME and S-GW).

The information or signals may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A determination may be realized by a value (0 or 1) represented by one bit, by a boolean value (true or false), or by comparison of numerical values (e.g., comparison with a predetermined value).

Each aspect/embodiment described in the present disclosure may be used independently, may be used in combination, or may be used by switching according to operations. Further, notification of predetermined information (e.g., notification of "X") is not limited to an explicit notification, and may be performed by an implicit notification (e.g., by not performing notification of the predetermined information).

Software should be broadly interpreted to mean, regardless of whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) and wireless technologies (infrared, microwave, etc.), at least one of these wired line technologies or wireless technologies is included within the definition of the transmission medium.

Information, a signal, or the like, described in the present disclosure may be represented by using any one of various different technologies. For example, data, an instruction, a command, information, a signal, a bit, a symbol, a chip, or the like, referred to throughout the above description, may be represented by a voltage, an electric current, electromagnetic waves, magnetic fields, a magnetic particle, optical fields, a photon, or a combination thereof.

It should be noted that a term described in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," and so on can be used interchangeably. The gNB 100 may be referred to as the terms such as a "macro cell," a "small cell," a "femto cell," a "pico cell," and so on.

A gNB 100 can accommodate one or a plurality of (for example, three) cells (which may be referred to as sectors). When a gNB 100 accommodates a plurality of cells, the entire coverage area of the gNB 100 can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a gNB 100 and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases by the skilled person in the art.

At least one of a gNB 100 and a mobile station may be referred to as a "transmitting apparatus," a "receiving apparatus," a "communication apparatus," and so on. Note that at least one of a gNB 100 and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a gNB 100 and a mobile station also includes an apparatus which does not necessarily move during communication operation. For example, at least one of a gNB 100 and a mobile station may be an Internet of Things (IoT) device such as a sensor.

Furthermore, the gNB 100 in the present disclosure may be interpreted as a mobile station (user terminal, hereinafter the same). For example, each aspect/embodiment of the present disclosure may be applied to the structure that replaces a communication between a gNB 100 and a mobile station with a communication between a plurality of mobile stations (for example, which may be referred to as "Device-to-Device (D2D)," "Vehicle-to-Everything (V2X)," and the like). In this case, the mobile station may have the functions of the gNB 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the mobile station in the present disclosure may be interpreted as a gNB 100. In this case, the gNB 100 may have the functions of the mobile station described above. A radio frame may be constituted of one or a plurality of frames in the time domain. Each of one or a plurality of frames may be referred to as a "subframe" in the time domain. Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of the number of symbols less than a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a gNB 100 performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may be a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of one or more wires, cables, and printed electrical connections and, as a number of nonlimiting and non-inclusive examples, electromagnetic energy having wavelengths in the radio frequency region, the microwave region, and the light (both visible and invisible) region.

A reference signal may be abbreviated as an "RS," and may be referred to as a "pilot", depending on which standard is applied.

The phrase "based on" as used in the present disclosure does not mean "based only on", unless otherwise specified. In other words, the phrase "based on" means both "based only on" and "based at least on".

"Means" included in the configuration of each of the above apparatuses may be replaced by "parts", "circuits", "devices", etc.

Reference to elements with designations such as "first," "second," and so on used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present disclosure is not intended to be an "exclusive or".

In the present disclosure, in the case where an article is added by translation, for example "a", "an", and "the", the disclosure may include that the noun following these articles is plural.

As used in the present disclosure, the term "determining" may encompasses a wide variety of actions. For example, "determining" may be regarded as determining to have performed judging, calculating, computing, processing, deriving, investigating, looking up (looking up, search, inquiry) (e.g., looking up in a table, a database or another data structure), ascertaining and the like. Also, "determining" may be regarded as determining to have performed receiving (e.g., receiving information), transmitting (e.g., transmitting information), inputting, outputting, accessing (e.g., accessing data in a memory) and the like. Also, "determining" may be regarded as determining to have performed resolving, selecting, choosing, establishing, comparing and the like. That is, "determining" may be regarded as determining to have performed some action. Moreover, "determining" may be read as "assuming", "expecting", "considering", and the like.

In this disclosure, the term "A and B are different" may mean "A and B are different from each other." It should be noted that the term "A and B are different" may mean "A and B are different from C." Terms such as "separated" or "combined" may be interpreted in the same way as the "different".

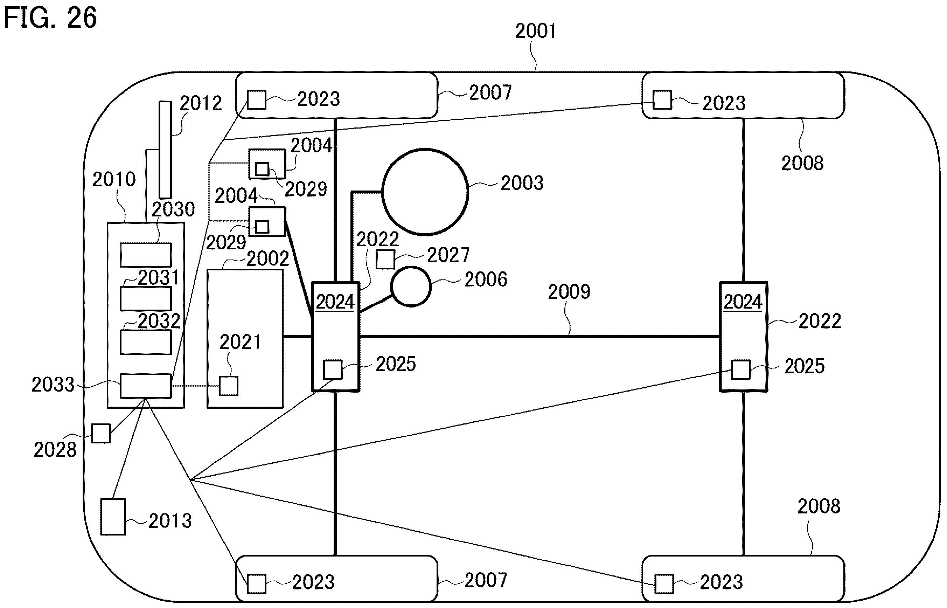

Fig. 26 shows an example of a configuration of a vehicle 2001. As shown in Fig. 26, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021-2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-29 provided in the vehicle. The electronic control unit 2010 may be referred to as an ECU (Electronic Control Unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a gNB 100, a mobile station, or the like.

The communication module 2013 transmits a current signal from a current sensor, which is input to the electronic control unit 2010, to external devices through radio communication. Also, the communication module 2013 transmits to external devices through radio communication, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like, which are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

As described above, the present disclosure has been described in detail. It is apparent to a person skilled in the art that the present disclosure is not limited to one or more embodiments described in the present disclosure. The present disclosure can be implemented as modifications and variations without departing from the subject matter and the scope of the present disclosure defined by the descriptions of claims. Therefore, the descriptions of the present disclosure are for illustrative purposes only, and are not intended to be any limitations to the present disclosure.

### Reference Signs List

- 10: radio communication system
- 20: NG-RAN
- 100: gNB
- 110: reception unit
- 120: transmission unit
- 130: control unit
- 200: UE
- 210: radio signal transmission and reception unit
- 220: amplifier unit
- 230: modulation and demodulation unit
- 240: control signal and reference signal processing unit
- 250: encoding/decoding unit
- 260: data transmission and reception unit
- 270: control unit
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: left and right front wheels
- 2008: left and right rear wheels
- 2009: axle
- 2010: electronic control unit
- 2012: information service unit
- 2013: communication module
- 2021: current sensor
- 2022: rotational speed sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A radio base station comprising:
a control unit that controls an execution of an addition/change procedure of a secondary cell; and
a transmission unit that transmits a message to a transition target secondary node for a terminal when executing the addition/change procedure, the message including information of a candidate secondary cell that is a transition target maintained by the terminal.

2. A radio base station comprising:
a control unit that controls an execution of an addition/change procedure of a secondary cell; and
a transmission unit that transmits a message to a transition target secondary node for a terminal, the message including an indication indicating whether the terminal maintains configuration information of a transition source secondary cell.

3. A radio base station comprising:
a control unit that controls an execution of an addition/change procedure of a secondary cell; and
a transmission unit that transmits a message to a terminal, the message including an indication indicating whether the terminal needs to maintain an execution condition for the addition/change procedure after executing the addition/change procedure.

4. A radio base station comprising:
a control unit that controls an execution of an addition/change procedure of a secondary cell; and
a transmission unit that transmits a message to a terminal, the message including an indication indicating that the addition/change procedure is initiated by a master node or the addition/change procedure is initiated by a secondary node.

5. A radio base station comprising:
a control unit that controls an execution of an addition/change procedure of a secondary cell; and
a transmission unit that transmits a message to a terminal, the message including an indication indicating an execution condition for the addition/change procedure configured by a master node, or an execution condition for the addition/change procedure configured by a secondary node.
